# EUROPÄISCHE PATENTSCHRIFT

(11) **EP 3 798 176 B1**
(45) Veröffentlichungstag und Bekanntmachung des Hinweises auf die Patenterteilung: **21.02.2024**
(21) Anmeldenummer: 20179643.0
(22) Anmeldetag: 12.06.2020
(51) Int. Cl.: B66D 5/30, B60T 17/22, H01F 7/18, F16D 59/02, B66B 5/00

(54) **VERFAHREN UND VORRICHTUNG ZUR ÜBERWACHUNG EINER ELEKTROMAGNETISCHEN BREMSE**
METHOD AND DEVICE FOR MONITORING AN ELECTROMAGNETIC BRAKE
PROCÉDÉ ET DISPOSITIF DE SURVEILLANCE D'UN FREIN ÉLECTROMAGNÉTIQUE

(30) Priorität: 14.06.2019 DE 102019116221
(43) Veröffentlichungstag der Anmeldung: 31.03.2021
(73) Patentinhaber: ZIEHL-ABEGG SE, 74653 Künzelsau (DE)
(72) Erfinder: DIETRICH, Volker, 74626 Bretzfeld (DE); EISERT, Gerhard, 74676 Niedernhall (DE); SCHNAUFFER, Bernd, 74535 Mainhardt-Hütten (DE); HOFMANN, Hanna, 74653 Ingelfingen (DE)
(74) Vertreter: Mertzlufft-Paufler, Cornelius

(56) Entgegenhaltungen:
- EP-A1- 1 462 673
- EP-A1- 3 239 086
- WO-A1-2006/033165
- WO-A1-2009/024168
- DE-A1-102012 007 863

## Beschreibung

Die Erfindung beschreibt ein Verfahren zur Überwachung einer elektromagnetischen Bremse, wobei ein Spulenstrom erfasst wird, um eine Ankerbewegung zu detektieren, und wobei eine detektierte Ankerbewegung verworfen wird, wenn eine Versorgungsspannung für den Spulenstrom von einem vorgegebenen Verlauf zu stark abweicht.

Elektromagentische Bremsen werden beispielsweise bei Aufzügen verwendet, um etwa bei einem Stromausfall im Antrieb die Aufzugskabine anzuhalten oder zu halten.

Die Bremse wird in der Regel durch eine Feder geschlossen, so dass in Ruhestellung eine Bremsfunktion vorliegt. Zum Öffnen der Bremse steht ein elektromagnetischer Antrieb zur Verfügung. Hier besteht die Notwendigkeit sicher zu stellen, dass ein Anker sich auch tatsächlich bewegt.

Im Stand der Technik sind hierzu verschiedene Lösungen bekannt. Neben einer Überwachung des Spulenstroms ist es auch bekannt, die Spannung zu überwachen, um Stromänderungen aufgrund von Spannungsschwankungen auszuschließen.

Die WO 2009/024168 A1 beschreibt eine Vorrichtung zur Überwachung einer elektromagnetischen Bremse bei der Mittel zum Überwachen des zeitlichen Verlaufs eines Stromes zum Betätigen der Bremse vorhanden sind, wobei Bewegungen und ein Status der Bremse aus diesem Verlauf abgeleitet werden.

Die WO 2009/024168 A1 offenbart Verfahren gemäß den Oberbegriffen der unabhängigen Ansprüche 1, 3, 4 und 6 sowie Bremsenüberwachungseinrichtungen gemäß den Oberbegriffen der unabhängigen Ansprüche 12 und 13.

Die Erfindung hat sich die Aufgabe gestellt, die Erkennung einer Ankerbewegung zuverlässiger und sicherer zu gestalten. Diese Aufgabe wird erfindungsgemäß durch die Verfahren und Vorrichtung gemäß den unabhängigen Ansprüchen gelöst.

Gemäß einer Ausführung der Erfindung wird die detektierte Ankerbewegung nur dann verworfen, wenn die Abweichung der Versorgungsspannung in dem Zeitbereich, in welchem die Ankerbewegung detektiert wurde, auftrat.

Auf diese Weise können Spannungsschwankungen, die zeitlich vor oder nach der Ankerbewegung auftreten unberücksichtigt bleiben. Dadurch kann die Anzahl der fehlerhaft verworfenen Ankerbewegungen reduziert werden.

Hierbei kann es zweckmäßig sein, wenn eine Überwachung einer Abweichung der Versorgungsspannung von einem vorgegebenen Verlauf erst gestartet wird, wenn der Spulenstrom einen ersten Schwellwert übersteigt.

In einer Ausführung wird als Sollwert für die Versorgungsspannung der Momentanwert der Versorgungsspannung zu einem bestimmten Zeitpunkt gewählt.

Eine Ausführung der Erfindung bei der ein Spulenstrom erfasst wird, um eine Ankerbewegung zu detektieren, und eine detektierte Ankerbewegung verworfen wird, wenn eine Versorgungsspannung für den Spulenstrom von einem vorgegebenen Verlauf zu stark abweicht, wobei die detektierte Ankerbewegung nur dann verworfen wird, wenn die Abweichung der Versorgungsspannung ausreichend stark war, um eine Änderung des Spulenstroms zu bewirken, die zu einer Detektion einer Ankerbewegung führen würde.

Das bedeutet insbesondere, dass die Ankerbewegung nicht verworfen wird, wenn die abweichende Spannung zu gering ist, um eine Änderung des Spulenstroms zu bewirken, die zu einer Detektion einer Ankerbewegung führen würde. Es liegt also zwar eine Spannungsabweichung vor, die aber keine Auswirkung haben kann. Dies führt dazu, dass weit weniger Ankerbewegungen verworfen werden müssen und somit ein sicherer und reibungsloserer Betrieb möglich ist.

In einem Verfahren zur Überwachung einer elektromagnetischen Bremse, bei dem ein Spulenstrom erfasst wird, um eine Ankerbewegung zu detektieren, und wobei eine detektierte Ankerbewegung verworfen wird, wenn eine Versorgungsspannung für den Spulenstrom von einem vorgegebenen Verlauf zu stark abweicht, wird die detektierte Ankerbewegung nur dann verworfen, wenn die Abweichung der Versorgungsspannung eine bestimmte Richtung aufweist (Erhöhung oder Verringerung), um eine Änderung des Spulenstroms zu bewirken, die zu einer Detektion einer Ankerbewegung führen würde.

Hierbei werden beispielsweise solche Ankerbewegungen behalten, bei denen zwar eine Spannungsänderung detektiert wird, die jedoch einen anderen Stromverlauf ergeben würden, wie der gemessene. Insbesondere wenn die Spannungsänderung das falsche Vorzeichen besitzt. Also beispielsweise, wenn die Spannung stark erhöht ist, der gemessene Strom jedoch nur durch eine verringerte Spannung zustande hätte kommen können.

In einer Ausführung der Erfindung wird bei einer verworfenen detektierten Ankerbewegung, weil die Versorgungsspannung für den Spulenstrom von einem vorgegebenen Verlauf zu stark abweicht, dies über einen Ausgang angezeigt. Dadurch können erneute Versuche zum Öffnen der Bremse eingeleitet werden, mit der Möglichkeit, dass bei diesen keine Abweichung der Versorgungsspannung auftritt und dann eine verlässliche Detektion erfolgen kann. Dies erhöht die Verfügbarkeit des Systems.

In einer Ausführung der Erfindung wird die Versorgungsspannung gefiltert, wobei eine Filtercharakteristik so gewählt ist, dass Abweichungen, deren zeitliche Länge und/oder Stärke zu klein ist, um eine Detektion einer Ankerbewegung auslösen zu können, herausgefiltert werden.

In einem erfindungsgemäßen Verfahren zur Überwachung einer elektromagnetischen Bremse, bei dem ein Spulenstrom erfasst wird, um eine Ankerbewegung zu detektieren, ist dadurch gekennzeichnet, dass aus dem Momentanwert des Spulenstroms, dessen zweiter zeitlicher Ableitung wenigstens ein Kriterium gebildet wird, welches zur Detektion der Ankerbewegung geprüft wird.

Der Spulenstrom bildet in der Regel eine Exponentialform, wenn der Anker nicht bewegt wird. Falls der Anker jedoch korrekt funktioniert, entsteht im Stromverlauf durch die gegenelektromotorische Kraft eine charakteristische Änderung. Diese kann durch ein solches Kriterium beschrieben und erkannt werden.

In einer Ausführung der Erfindung wird als das wenigstens eine Kriterium ein Überschreiten oder Unterschreiten eines Schwellwertes durch den Momentanwert des Spulenstroms, dessen zweiter zeitlicher Ableitung verwendet.

In einer vorteilhaften Ausführung werden zeitlich nacheinander eine Reihe von Kriterien aus dem Momentanwert des Spulenstroms, dessen erster zeitlicher Ableitung und/oder dessen zweiter zeitlicher Ableitung gebildet, die nacheinander erfüllt sein müssen, um eine Ankerbewegung zu detektieren. Auf diese Weise kann die charakteristische Form der Stromänderung aufgrund der Ankerbewegung besser nachgebildet und sicher erkannt werden.

Beim Öffnen und/oder beim Schließen der Bremse können jeweils ein oder mehrere Kriterien gebildet werden, die erfüllt sein müssen, um eine Ankerbewegung zu detektieren.

Insbesondere zweckmäßig ist es, wenn beim Öffnen der Bremse wenigstens fünf Kriterien, und/oder beim Schließen der Bremse wenigstens ein Kriterium, insbesondere zwei Kriterien, erfüllt sein müssen.

In einer vorteilhaften Ausführung der Erfindung sind beim Öffnen der Bremse fünf Kriterien zu erfüllen, wobei das erste Kriterium, dass die zweite Ableitung des Momentanwerts des Spulenstroms negativ ist, das zweite Kriterium, dass die erste Ableitung des Momentanwerts des Spulenstroms negativ ist, das dritte Kriterium, dass die zweite Ableitung des Momentanwerts des Spulenstroms positiv ist, das vierte Kriterium, dass die erste Ableitung des Momentanwerts des Spulenstroms positiv ist und das fünfte Kriterium, dass die zweite Ableitung des Momentanwerts des Spulenstroms negativ ist.

In einer Ausführung der Erfindung wird eine Überwachung einer Abweichung der Versorgungsspannung von einem vorgegebenen Verlauf erst gestartet wird, wenn das erste Kriterium erfüllt ist. Auf diese Weise werden Spannungsänderungen, die zu unkritischen Zeitpunkten erfolgen, unberücksichtigt.

Dabei wird insbesondere die aktuelle Spannung als Referenzwert gespeichert. Dadurch können unterschiedliche Versorgungsspannungen automatisch berücksichtigt werden, ohne dass absolute Spannungswerte vorgegeben oder angepasst werden.

In einer vorteilhaften Ausführung der Erfindung sind beim Schließen der Bremse zwei Kriterien zu erfüllen, wobei das erste Kriterium, dass die zweite Ableitung des Momentanwerts des Spulenstroms positiv ist und das zweite Kriterium, dass die zweite Ableitung des Momentanwerts des Spulenstroms negativ ist.

Die Erfindung umfasst auch eine Bremsenüberwachungseinrichtung, mit einer Detektionseinrichtung, mit der eine Ankerbewegung durch Auswertung eines Spulenstroms detektierbar ist, und einer Überprüfungsvorrichtung, die zur Überwachung einer Versorgungsspannung für den Spulenstrom eingerichtet ist, so dass eine detektierte Ankerbewegung verworfen wird, wenn eine Versorgungsspannung für den Spulenstrom von einem vorgegebenen Verlauf zu stark abweicht.

In einer Ausführung ist die Bremsenüberwachungseinrichtung ferner dadurch gekennzeichnet, dass ein Ausgang vorhanden ist, der eine verworfene detektierte Ankerbewegung bei erkannter Abweichung der Versorgungsspannung anzeigt. Dadurch kann eine Aufzugsteuerung in geeigneter Weise auf die verworfene Ankerbewegung reagieren.

In einer alternativen Ausführung der Erfindung ist die Bremsenüberwachungseinrichtung ferner dadurch gekennzeichnet, dass eine Plausibilitätsprüfungseinheit ausgebildet ist, mit welcher die Überprüfungsvorrichtung deaktivierbar ist, wenn eine Abweichung der Versorgungsspannung nicht geeignet ist, eine falsche Ankerbewegung zu erzeugen. Auf diese Weise st eine Ankerbewegung wesentlich zuverlässiger erkennbar.

In einer vorteilhaften Ausführung weist die Bremsenüberwachungseinrichtung eine Plausibilitätsprüfungseinheit und einen Ausgang wie oben beschrieben auf.

Insbesondere ist eine erfindungsgemäße Bremsenüberwachungseinrichtung dazu ausgebildet ein erfindungsgemäßes Verfahren auszuführen.

Die Erfindung ist nachfolgend anhand eines bevorzugten Ausführungsbeispiels mit Bezug auf die beiliegenden Zeichnungen näher erläutert.

Es zeigt:
- Fig. 1:: eine erfindungsgemäße Vorrichtung zur Überwachung einer elektromagnetischen Bremse,
- Fig. 2:: ein Diagramm des zeitlichen Verlaufs verschiedener Signale beim Einschalten und Ausschalten einer elektromechanischen Bremse,
- Fig. 3:: ein Diagramm des zeitlichen Verlaufs verschiedener Signale beim Einschalten und Ausschalten einer elektromechanischen Bremse mit verschiedenen Fehlersituationen,
- Fig. 4:: ein Diagramm des zeitlichen Verlaufs verschiedener Signale beim Einschalten einer elektromechanischen Bremse mit verschiedenen Kriterien gemäß der Erfindung,
- Fig. 5:: ein Diagramm des zeitlichen Verlaufs verschiedener Signale beim Ausschalten einer elektromechanischen Bremse mit verschiedenen Kriterien gemäß der Erfindung,
- Fig. 6:: ein Diagramm des zeitlichen Verlaufs der Spannung und des Stromes beim Einschalten einer elektromechanischen Bremse mit einer erfindungsgemäßen Spannungsabweichung,

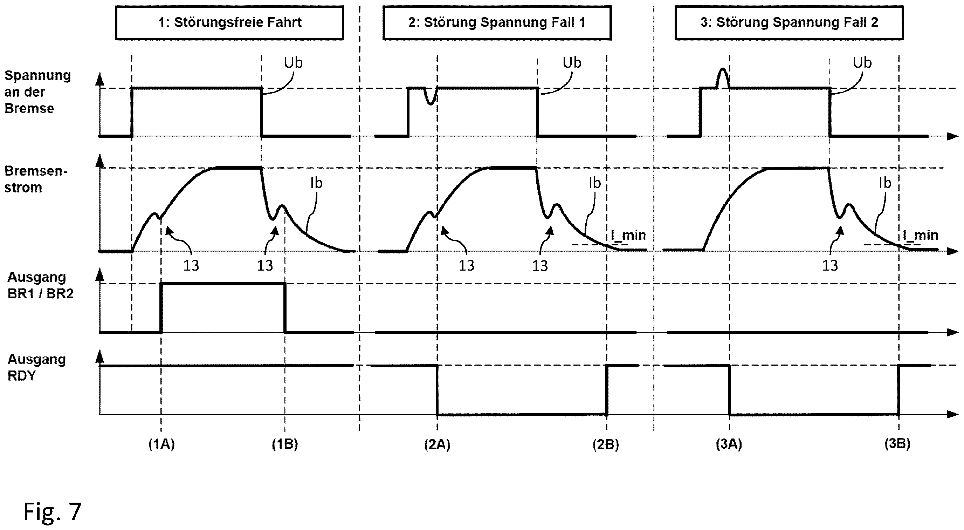

- Fig. 7:: ein Diagramm des zeitlichen Verlaufs verschiedener Signale beim Einschalten und Ausschalten einer elektromechanischen Bremse mit verschiedenen Spannungsabweichungen,
- Fig. 8:: ein Diagramm des zeitlichen Verlaufs des Stromes beim Einschalten einer elektromechanischen Bremse und die dabei zulässigen Spannungsgrenzen gemäß der Erfindung,
- Fig. 9:: ein Ablaufdiagramm eines erfindungsgemäßen Verfahrens beim Öffnen der Bremse und
- Fig. 10:: ein Ablaufdiagramm eines erfindungsgemäßen Verfahrens beim Schließen der Bremse.

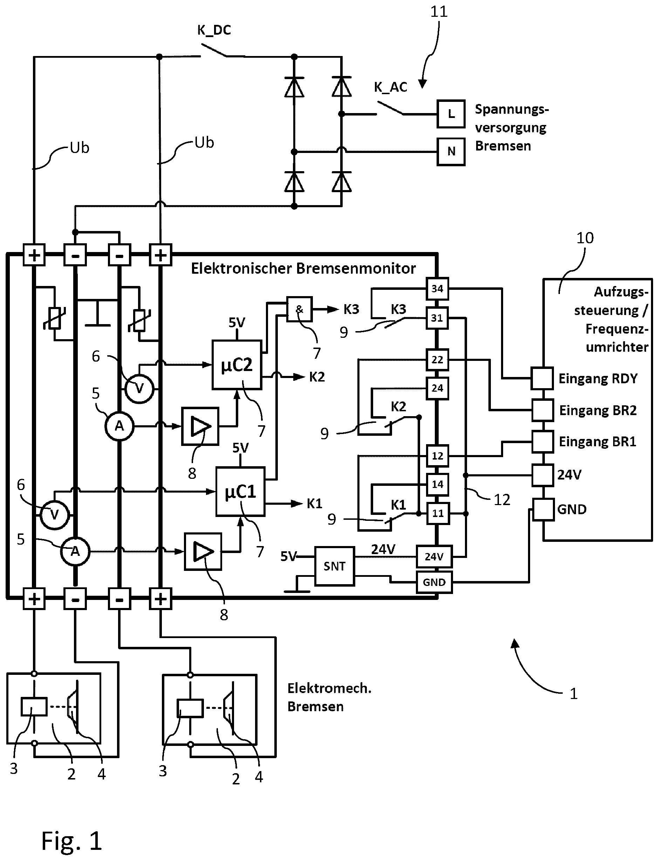

Die Fig. 1 zeigt eine erfindungsgemäße, im Ganzen mit 1 bezeichnete Vorrichtung zur Überwachung einer elektromagnetischen Bremse, im Folgenden Bremsenmonitor. Bei einem Personenaufzug sind redundante Systeme vorgeschrieben, weshalb der Bremsenmonitor 1 im Beispiel mit zwei elektromechanischen Bremsen 2 verbunden ist.

Die elektromechanische Bremse 2 besitzt eine Antriebsspule 3 und einen Anker 4, der durch Anlegen eines Stromes an die Antriebsspule 3 bewegt werden kann. Der Anker 4 ist in der Regel durch eine Feder beaufschlagt, so dass die Bremse 2 in Ruhestellung geschlossen ist. Zum Öffnen der Bremse, also zum Lösen, muss die Antriebsspule 3 bestromt werden, so dass sich der Anker 4 aufgrund der elektromagnetischen Kraft bewegt.

Für jede Bremse 2 besitzt der Bremsenmonitor 1 ein Strommessgerät 5 zum Erfassen des Spulenstromes und ein Spannungsmessgerät 6 zum Erfassen der Versorgungsspannung für den Spulenstrom.

Das Strommessgerät 5 und das Spannungsmessgerät 6 sind jeweils mit einem Mikrocontroller 7 verbunden, der eine Detektionseinrichtung, mit der eine Ankerbewegung durch Auswertung des Spulenstroms detektierbar ist, und eine Überprüfungsvorrichtung, die zur Überwachung der Spulenspannung eingerichtet ist, aufweist. Im Beispiel ist zwischen Strommessgerät 5 und Mikrocontroller 7 jeweils ein Verstärker 8 angeordnet. Dieser kann jedoch auch beispielsweise direkt im Strommessgerät 5 integriert sein.

Der Bremsenmonitor 1 besitzt drei Statussignalausgänge BR1, BR2, RDY, die im Beispiel über Relais 9 K1, K2, K3 angesteuert sind. Die Relais 9 werden jeweils durch die Mikrocontroller 7 gesteuert. Der dritte Ausgang RDY wird aus einem UNDverknüpften Signal der beiden Mikrocontroller 7 angesteuert. Die Relais 9 können dabei als mechanische, elektronische oder optische Schalter ausgebildet sein, wobei die Ausführung für die Erfindung keine Rolle spielt.

Die Signalausgänge BR1, BR2, RDY, sind mit einer Aufzugssteuerung 10 verbunden, die unter Anderem die Antriebsmotoren des Aufzugs und auch die Bremsen 2 steuert.

Die Aufzugssteuerung kann ein Frequenzumrichter sein oder eine separate Ansteuerschaltung, die einen Frequenzumrichter ansteuert oder umfasst.

Der erfindungsgemäße Bremsenmonitor 1 dient somit nur der Überwachung der Bremsen 2 und zur Signalisierung an die Aufzugssteuerung 10. Eine Reaktion auf die Signale des Bremsenmonitors erfolgt in der Aufzugssteuerung 10.

Der Bremsenmonitor 1 ist weiterhin mit der Spannungsversorgung 11 für die Bremsen 2 verbunden. Diese ist im Bremsenmonitor 1 im Wesentlichen durchgeschleift, wobei die Spannungsmessgeräte 6 und Strommessgeräte 5 an beziehungsweise in diesen Durchleitungen angeordnet sind.

Der Bremsenmonitor 1 wird im Beispiel über die Aufzugssteuerung 10 mit einer Betriebsspannung 12 versorgt. Diese Betriebsspannung 12 liegt im Beispiel auch an den Relais 9 an.

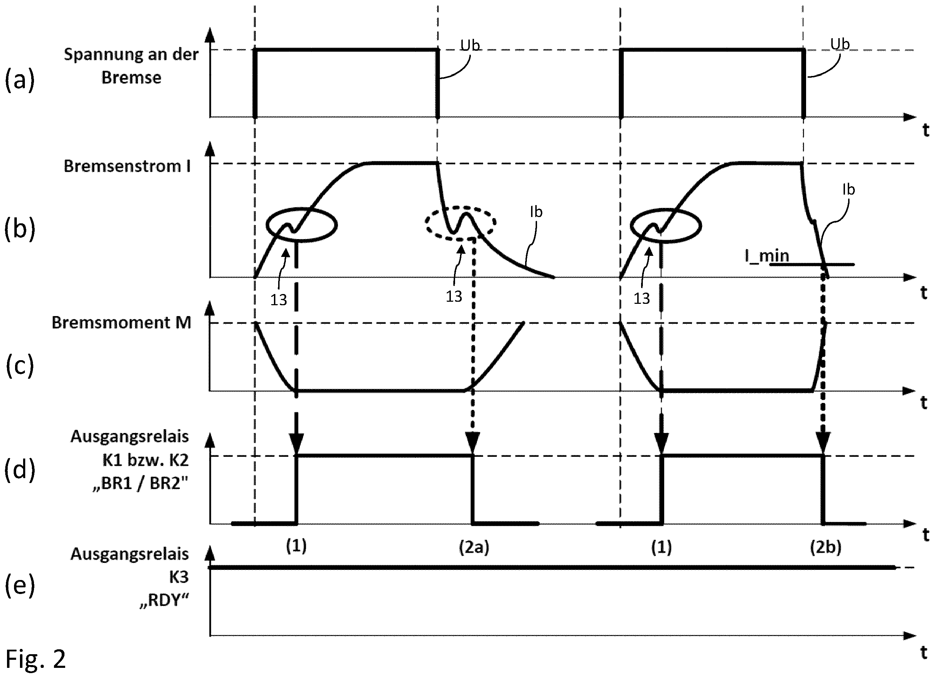

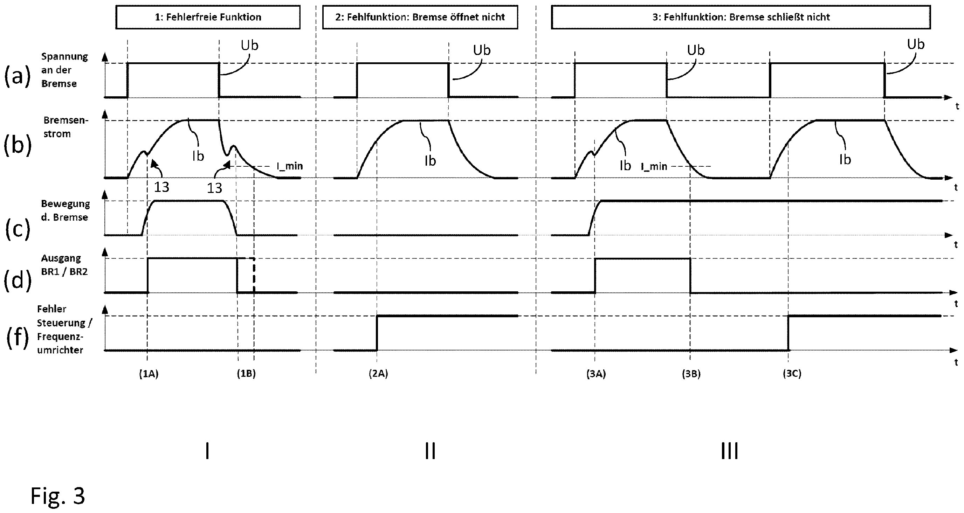

Die Fig. 2 und 3 beschreiben verschiedene Signale bei der Überwachung der Bremsen.

Die Fig. 2(a) zeigt den zeitlichen Verlauf der Spannung Ub an der Bremse 2, also an der Antriebsspule 3. Diese ist in der Regel eine gleichgerichtete Wechselspannung, die hier vereinfacht als ein Rechtecksignal dargestellt ist. Die Spannung Ub wird über die Schalter K_DC und/oder K_AC (vgl. Fig. 1) ein- oder ausgeschaltet.

In Fig. 2(b) ist der Spulenstrom Ib dargestellt. Beim Einschalten der Spannung Ub zum Lösen der Bremse 2 steigt der Spulenstrom Ib zunächst exponentiell an. Aufgrund der durch die Ankerbewegung induzierten elektromotorischen Kraft weist der Stromverlauf eine charakteristische Delle 13 auf im Punkt (1) auf.

Ab diesem Zeitpunkt (1) ist das Bremsmoment M ebenfalls abgeklungen (Fig. 2(c)), so dass die Ausgangsrelais 9 schließen (Fig. 2(d)). Das kombinierte Signal RDY (Fig. 2(e)) zeigt an, ob eine Detektion verworfen wurde und ist im gezeigten Beispiel immer gesetzt, also das Relais K3 geschlossen.

Eine solche Delle 13 liegt auch beim Ausschalten der Spannung Ub durch den Wechselspannungsschalter K_AC vor. Ab dem Zeitpunkt (2a), nach der Delle 13, beginnt das Bremsmoment M zu steigen.

Es besteht auch die Möglichkeit eine Schnellabschaltung durchzuführen, in dem der Gleichspannungsschalter K_DC geöffnet wird. In diesem Fall erfolgt das Abklingen des Stromes Ib schneller, so dass keine ausgeprägte Delle 13 erkennbar ist. In dem Punkt (2b), werden die Relais K1/K2 (Fig. 2(d)) bei Unterschreiten des Stromgrenzwertes I_min (Fig. 2(b)) zurückgesetzt.

Neben diesem Normalbetrieb können mehrere Fehler auftreten, die erkannt werden müssen.

In Fig. 3 I ist der Normalbetrieb wie in Fig. 2 dargestellt. Bei Erkennung einer Delle 13 oder bei Unterschreiten des Stromes I_min (Fig. 3 (b)) erfolgt eine Rücksetzung der Relais K1/K2 (Fig. 3 (d)).

Die Fig. 3 II zeigt den Stromverlauf, wenn sich der Anker 4 trotz Anlegen einer Spannung Ub nicht öffnet. Aufgrund der fehlenden Gegeninduktion steigt hier gemäß II(b) der Strom Ib lediglich exponentiell an und klingt nach dem Ausschalten der Spannung Ub auch exponentiell wieder ab. Die charakteristischen Dellen 13 fehlen hier. Durch das Fehlen der Dellen erfolgt kein Schalten der Relais 9, so dass ab dem Zeitpunkt 2A ein Fehlersignal f von der Aufzugssteuerung 10 angezeigt wird und eine entsprechend Fehlerreaktion erfolgt.

In Fig. 3 III ist der Fall dargestellt, dass die Bremse 2 zwar korrekt öffnet, aber nicht mehr schließt. Es wird zunächst das Relais 9 geschlossen, so dass eine normale Funktion signalisiert wird. Bei Ausschalten der Spannung Ub schließt die Bremse aber nicht. Da jedoch der Strom Ib auf sein Minimum abfällt wird zunächst noch kein Fehler erkannt. Bei Unterschreiten des Stromes I_min (Fig. 3 (b)) erfolgt zunächst eine Rücksetzung der Relais K1/K2 (Fig. 3 (d)). Erst wenn zum nächsten Mal die Bremse geöffnet werden soll, erfolgt aufgrund des festsitzenden Ankers 4 keine Delle 13 im Strom Ib. Ab diesem Moment 3c wird eine Fehlfunktion festgestellt und das Fehlersignal gesetzt.

Zum Erkennen der Delle 13 beim Einschalten der Spannung Ub, also zum Öffnen der Bremse 2, sind in einer beispielhaften Ausführung der Erfindung fünf Kriterien definiert, die nacheinander erfüllt sein müssen, damit ein korrektes Öffnen der Bremse 2 erkannt und ein entsprechendes Signal BR1 oder BR2 an die Aufzugssteuerung 10 gesetzt werden kann. Es kann jedoch auch eine andere Anzahl an Kriterien verwendet werden oder definiert sein.

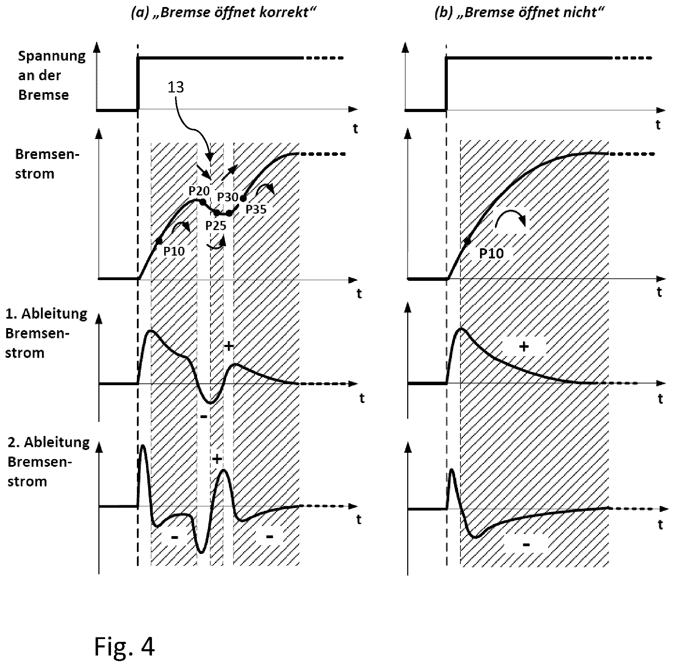

Diese Kriterien sind gemäß Fig. 4(a) aus dem Strom Ib, der ersten Ableitung Ib1 und der zweiten Ableitung Ib2 des Momentanwerts des Stroms Ib bestimmt.

Beim Zuschalten der Spannung Ub an der Bremse 2 steigt der Strom Ib zunächst entsprechend einer Exponentialfunktion an. Die Stromkurve zeigt eine Rechtskrümmung. Die zweite Ableitung Ib2 ist negativ. Dies ist das erste Kriterium P10.

Beim Anziehen des Ankers 4 fällt der Strom Ib ab (negative Steigung). Die erste Ableitung Ib1 wird negativ, was Kriterium P20 entspricht.

Anschließend geht die Kurvenform des Stromes Ib von einer Rechtskrümmung über in eine Linkskrümmung. Kriterium P25 ist hier, dass die zweite Ableitung Ib2 positiv wird.

Mit dem Ende der Bewegung des Ankers 4 geht die Kurvenform wieder in einen Verlauf mit positiver Steigung. Kriterium P30 ist daher, dass die erste Ableitung Ib1 positiv ist.

Schließlich geht die Kurvenform von einer Linkskrümmung wieder über in eine Rechtskrümmung. Das Kriterium P35 ist, dass die zweite Ableitung Ib2 negativ wird.

Diese Kriterien müssen in der Reihenfolge P10, P20, P25, P30, P35 nacheinander erfüllt sein, damit eine Bewegung des Ankers festgestellt wird.

Zur Erfüllung der Kriterien können Bereiche definiert sein. Insbesondere sind die Grenzwerte so gewählt, dass eine nichtschaltende Bremse nicht fehlerhaft als schaltend bewertet wird und eine schaltende Bremse nicht fehlerhaft als nichtschaltende Bremse bewertet wird. Dies erhöht die Sicherheit beziehungsweise die Verfügbarkeit der Bremse.

Die Fig. 4(b) zeigt den Verlauf bei einer nicht schaltenden Bremse, also wenn sich der Anker 4 nicht bewegt. Das Kriterium P10 wird noch erfüllt. Aufgrund der fehlenden Delle 13 bleibt dieser Zustand jedoch, so dass schon das Kriterium P20 nicht erfüllt wird.

Gemäß der Erfindung ist es nun möglich, eine fehlerhafte Ankerbewegung bereits sofort zu erkennen, so dass die Erkennung schneller und sicherer ist.

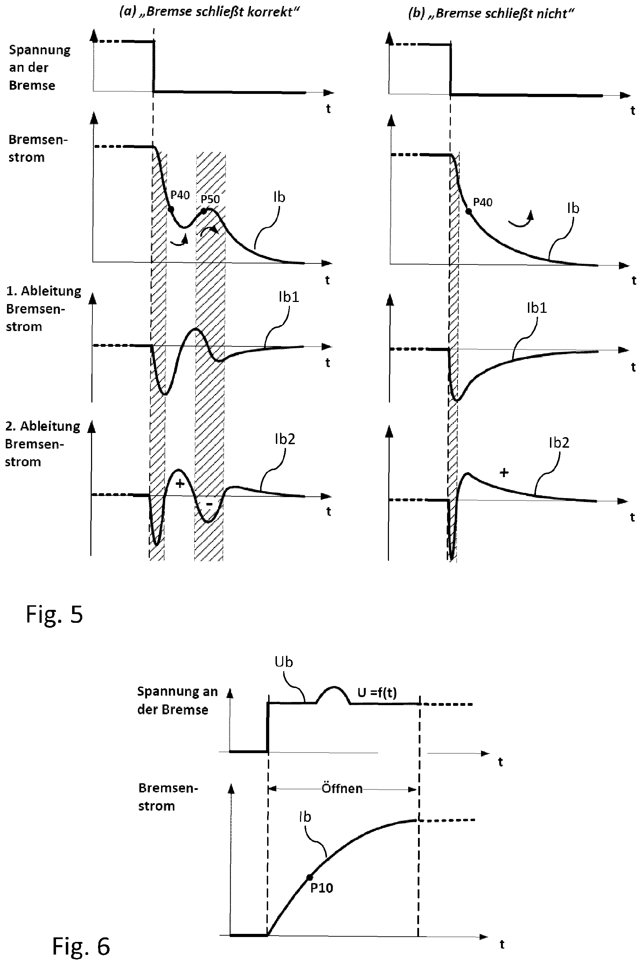

Die Fig. 5(a) zeigt entsprechend zur Fig. 4(a) die Kriterien zum Erkennen eines korrekten Schließvorgangs der Bremse 2. Hier sind im Beispiel zwei Kriterien notwendig. Es kann jedoch auch eine andere Anzahl an Kriterien verwendet werden oder definiert sein. Insbesondere kann die Anzahl an Kriterien gleich der Anzahl der Kriterien beim Öffnen sein.

Beim Abschalten der Spannung Ub an der Bremse 2 fällt der Strom Ib zunächst entsprechend einer Exponentialfunktion ab.

Die Kurvenform zeigt eine Linkskrümmung. Das Kriterium P40 ist daher, dass die zweite Ableitung Ib2 positiv ist.

Wenn der Anker 4 abfällt, geht die Kurvenform über in eine Rechtskrümmung, so dass die zweite Ableitung einen Vorzeichenwechsel besitzt. Das zweite Kriterium P50 ist daher, dass die zweite Ableitung Ib2 negativ ist.

Eine korrekte Bewegung des Ankers 2 beim Schließen der Bremse 2 erfordert daher die Erfüllung der Kriterium P40 und P50 in zeitlicher Abfolge.

Fig. 5(b) stellt die Situation dar, wenn die Bremse nicht schließt. Beim Abschalten der Spannung Ub an der Bremse 2 fällt der Strom Ib entsprechend einer Exponentialfunktion ab. Die Kurvenform zeigt eine Linkskrümmung. Die zweite Ableitung Ib2 ist positiv. Das Kriterium P40 ist erfüllt.

Da sich der Anker 4 jedoch nicht bewegt, ändert sich die Kurvenform nicht, bis der Strom Ib komplett abgeklungen ist. Die zweite Ableitung Ib2 besitzt keinen Vorzeichenwechsel. Das Kriterium P50 ist nicht erfüllt.

Auch hier sind die Werte oder Bereiche für die Kriterien so gewählt, dass das Schließen der Bremse nicht zu früh vor dem eigentlichen Schaltvorgang signalisiert wird und im Normalbetrieb der Zeitpunkt des Schaltvorgangs zuverlässig bestimmbar ist. Dies erhöht die Positioniergenauigkeit beziehungsweise den Komfort, wobei die sicherheitsrelevante Funktionsüberwachung der Bremse nur beim Öffnen der Bremse, also beim Einschalten der Spannung Ub, gemäß Fig. 4 erfolgt.

Die Kriterien beim Schließen und Öffnen der Bremse sind nachfolgend in der Tabelle zusammengefasst.

| Punkt | Bedingung | Parameter | Dauer |
|---|---|---|---|
| P10 | 2. Ableitung negativ | < -I_GRAD2_NEG_P10 | T_P10 |
| P20 | 1. Ableitung negativ | < -I_GRAD1_NEG_P20 | T_P20 |
| P25 | 2. Ableitung positiv | > +I_GRAD2_POS_P25 | T_P25 |
| P30 | 1. Ableitung positiv | > +I_GRAD1_POS_P30 | T_P30 |
| P35 | 2. Ableitung negativ | < -I_GRAD2_NEG_P35 | T_P35 |
| P40 | 2. Ableitung positiv | > I_GRAD2_POS_P40 | T_P40 |
| P50 | 2. Ableitung negativ | < -I_GRAD2_NEG_P50 | T_P50 |

Wobei die Parameter und die Dauern der einzelnen Kriterien von verschiedenen Bedingungen abhängen und für jede Bremse individuell ermittelt werden müssen.

Wie in Fig. 6 dargestellt, ist es denkbar, dass eine zeitliche Spannungserhöhung zum Zeitpunkt des Kriteriums P10 gerade so liegt, dass die gegenelektromotorische Kraft kompensiert wird. Es entsteht daher keine Delle 13. Das bedeutet, gemäß den Kriterien P10 bis P35 würde fälschlicherweise keine Bewegung des Ankers festgestellt werden. Analog dazu kann ein Spannungseinbruch bei Punkt P10 dafür sorgen, dass ein feststehender Anker fälschlicherweise als bewegt detektiert würde. Eine Ankerbewegung würde demnach verworfen, da eine Bewegung hier nicht eindeutig feststellbar ist.

Um solche Verwerfungen zu vermeiden erfolgt neben der Überwachung des Stromes Ib daher erfindungsgemäß zusätzlich eine Überwachung der Spannung Ub der Antriebsspule 3.

In einer Ausführung der Erfindung wird eine detektierte Ankerbewegung demnach nur Verworfen, wenn die Abweichung der Versorgungsspannung Ub ausreichend stark war, um eine Änderung des Spulenstroms Ib zu bewirken, die zu einer Detektion einer Ankerbewegung führen würde. Also nur dann, wenn die Spannungsschwankung so stark war, um eine Delle 13 zu kompensieren oder zu erzeugen. Insbesondere auch nur dann, wenn die Spannungsabweichung die richtige Richtung besitzt.

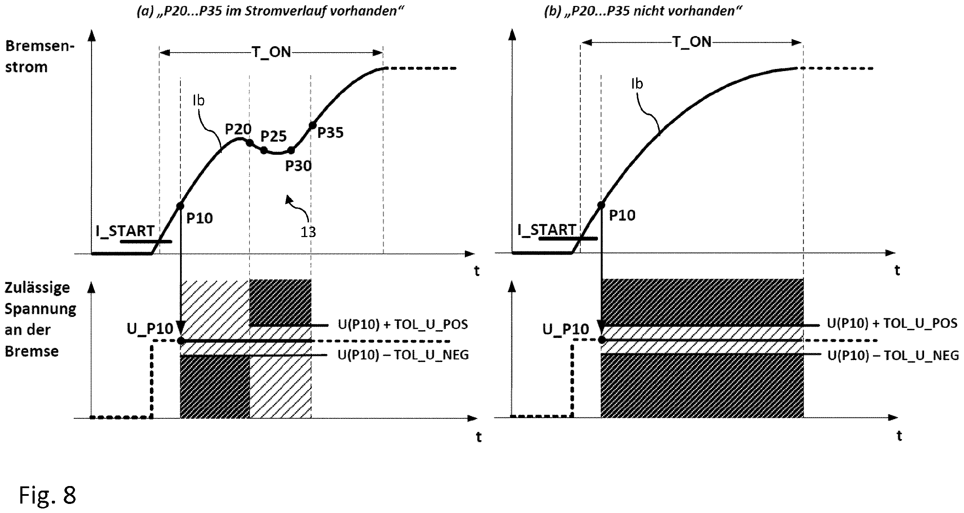

In einer weiteren Ausführung der Erfindung wird diese Unterscheidung weiter verfeinert und an die Kriterien der Stromüberwachung angepasst. In Fig. 8(a) sind im unteren Diagramm die erlaubten Spannungen zu verschiedenen Zeiten dargestellt.

Dabei wird erfindungsgemäß ab Erreichen des Kriteriums P10 die aktuelle Spannung Ub als Referenzwert gespeichert. Bis zum Kriterium P20, darf diese Spannung nach unten nur um eine untere Toleranzgrenze U(P10)-TOL_U_NEG abweichen, während nach oben eine Abweichung unkritisch ist. Ab dem Erreichen des Kriteriums P20 ist jedoch eine obere Abweichung nur bis zur oberen Toleranzgrenze U(P10)-TOL_U_POS zulässig, während ab da eine Abweichung nach unten unkritisch ist. Dabei können die obere Toleranzgrenze und untere Toleranzgrenze relativ zum Referenzwert in P10 ermittelt werden, oder von der Spulenspannung Ub abhängig sein, oder festgelegte Werte sein.

In einer Ausführung erfolgt die Spannungsüberwachung erst nachdem das Kriterium P10 erfüllt war.

Wird kein Kriterium P20 erfüllt, gelten die untere und die obere Toleranzgrenze, wie in Fig. 8(b) dargestellt. Auf diese Weise kann verhindert werden, dass eine Spannungserhöhung eine Delle 13 kompensiert und so eine nicht funktionierende Bremse suggeriert.

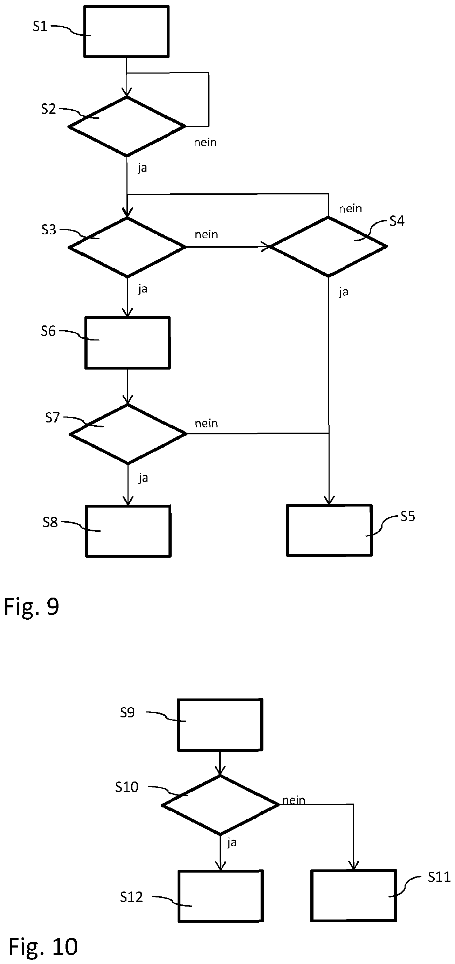

Die Fig. 9 zeigt ein Ablaufdiagramm eines beispielhaften erfindungsgemäßen Verfahrens beim Öffnen der Bremse. In einem ersten Schritt S1 wird der Spulenstrom Ib überwacht. In Schritt S2 wird geprüft, ob der Spulenstrom Ib eine Startschwelle I_Start überschritten hat. Falls nicht, wird die Stromüberwachung in Schritt S1 ausgeführt.

Falls ja, signalisiert dies, dass eine Spannung Ub an die Ankerspule 3 angelegt wurde. Es wird dann in Schritt S3 geprüft, ob das erste Kriterium P10 erfüllt ist. Falls nicht, wird zunächst in Schritt S4 geprüft, ob die Zeit T_ON, in der das Kriterium erwartet wird, abgelaufen ist. Falls die Zeit T_ON noch nicht abgelaufen ist, wird weiter auf die Erfüllung des Kriteriums P10 geprüft.

Falls jedoch die Zeit T_ON abgelaufen ist, liegt ein Fehler vor und es wird in Schritt S5 ein Fehler gemeldet. Im Beispiel der Fig. 1 wird das zur gerade überwachten Bremse gehörige Relais K1 oder K2 nicht geschaltet.

Ist jedoch das Kriterium P10 erfüllt, wird in Schritt S6 zunächst die aktuelle Spannung Ub als Referenzwert zur Spannungsüberwachung gespeichert und die Spannungsüberwachung gestartet. In Schritt S7 wird nun geprüft, ob die Kriterien P20 bis P35 nacheinander innerhalb der Zeit T_ON erfüllt sind und die Spannung innerhalb der Toleranzgrenzen gemäß Fig. 8 liegen. Ist auch nur ein Kriterium nicht erfüllt, wird nach Schritt S5 verzweigt und es wird das zur gerade überwachten Bremse gehörende Relais K1 oder K2 nicht geschaltet. Sind die Kriterien Erfüllt, aber die Spannung lag außerhalb der Toleranzgrenzen, werden die Relais K1 und K2 auch nicht geschaltet und zusätzlich wird das Signal RDY rückgesetzt.

Nur wenn alle Kriterien in der vorgesehen Zeit erfüllt sind und die Spannung Ub innerhalb der Toleranzgrenzen lag, erfolgt in Schritt S8 eine positive Rückmeldung durch Schalten der Relais K1 oder K2. Das Signal RDY bleibt dann gesetzt.

Beim Schließen der Bremse erfolgt eine Stromüberwachung in Schritt S9. Nach dem Ausschalten der Spannung Ub der Ankerspule 3 werden in Schritt S10 die Kriterien P40 und P50 in den erwarteten Zeiten überwacht. Sind beide Kriterien erfüllt, erfolgt in Schritt S12 direkt eine positive Rückmeldung an die Aufzugssteuerung, ansonsten erfolgt in Schritt S11 erst nach Unterschreiten einer Stromgrenze I_min eine positive Rückmeldung.

### Bezugszeichenliste

- 1: Bremsenmonitor
- 2: Bremse
- 3: Antriebsspule
- 4: Anker
- 5: Strommessgerät
- 6: Spannungsmessgerät
- 7: Mikrokontroller
- 8: Verstärker
- 9: Relais
- 10: Aufzugssteuerung
- 11: Spannungsversorgung Bremse
- 12: Betriebsspannung
- 13: Delle
- Ub: Spannung der Bremse
- Ib: Strom der Bremse
- Ib1: erste Ableitung des Stromes Ib
- Ib2: zweite Ableitung des Stromes Ib
- M: Bremsmoment
- BR1, BR2, RDY: Ausgangssignale
- K1, K2, K3: Relais für Ausgangssignale
- K_AC: Schalter zum Schalten der Bremse
- K_DC: Schalter für Schnellabschaltung der Bremse
- S1-S13: Verfahrensschritte

## Patentansprüche

1. Verfahren zur Überwachung einer elektromagnetischen Bremse (2), wobei ein Spulenstrom (Ib) erfasst wird, um eine Ankerbewegung zu detektieren, **dadurch gekennzeichnet, dass** eine detektierte Ankerbewegung verworfen wird, wenn eine Versorgungsspannung (Ub) für den Spulenstrom (Ib) von einem vorgegebenen Verlauf zu stark abweicht, wobei die detektierte Ankerbewegung nur dann verworfen wird, wenn die Abweichung der Versorgungsspannung (Ub) in dem Zeitbereich, in welchem die Ankerbewegung detektiert wurde, auftrat.

2. Verfahren nach Anspruch 1, **dadurch gekennzeichnet, dass** eine Überwachung einer Abweichung der Versorgungsspannung (Ub) von einem vorgegebenen Verlauf erst gestartet wird, wenn ein Startkriterium erfüllt ist, insbesondere der Spulenstrom (Ib) einen ersten Schwellwert (I_Start) übersteigt.

3. Verfahren zur Überwachung einer elektromagnetischen Bremse (2), insbesondere nach einem der vorangehenden Ansprüche, wobei ein Spulenstrom (Ib) erfasst wird, um eine Ankerbewegung zu detektieren, **dadurch gekennzeichnet, dass** eine detektierte Ankerbewegung verworfen wird, wenn eine Versorgungsspannung (Ub) für den Spulenstrom (Ib) von einem vorgegebenen Verlauf zu stark abweicht, wobei die detektierte Ankerbewegung nur dann verworfen wird, wenn die Abweichung der Versorgungsspannung (Ub) ausreichend stark war, um eine Änderung des Spulenstroms (Ib) zu bewirken, die zu einer Detektion einer Ankerbewegung führen würde.

4. Verfahren zur Überwachung einer elektromagnetischen Bremse (2), insbesondere nach einem der vorangehenden Ansprüche, wobei ein Spulenstrom (Ib) erfasst wird, um eine Ankerbewegung zu detektieren, **dadurch gekennzeichnet, dass** eine detektierte Ankerbewegung verworfen wird, wenn eine Versorgungsspannung (Ub) für den Spulenstrom (Ib) von einem vorgegebenen Verlauf zu stark abweicht, wobei die detektierte Ankerbewegung nur dann verworfen wird, wenn die Abweichung der Versorgungsspannung (Ub) eine bestimmte Richtung aufweist (Erhöhung oder Verringerung), um eine Änderung des Spulenstroms (Ib) zu bewirken, die zu einer Detektion einer Ankerbewegung führen würde.

5. Verfahren nach einem der vorangehenden Ansprüche, **dadurch gekennzeichnet, dass** die Versorgungsspannung (Ub) gefiltert wird, wobei eine Filtercharakteristik so gewählt ist, dass Abweichungen, deren zeitliche Länge und/oder Stärke zu klein ist, um eine Detektion einer Ankerbewegung auslösen zu können, herausgefiltert werden.

6. Verfahren zur Überwachung einer elektromagnetischen Bremse (2), insbesondere nach einem der vorangehenden Ansprüche, wobei ein Spulenstrom erfasst wird, um eine Ankerbewegung zu detektieren, **dadurch gekennzeichnet, dass** wenigstens aus der zweiten zeitlichen Ableitung des Momentanwerts des Spulenstroms wenigstens ein Kriterium gebildet wird, welches zur Detektion der Ankerbewegung geprüft wird.

7. Verfahren nach einem der vorangehenden Ansprüche, **dadurch gekennzeichnet, dass** als das wenigstens eine Kriterium ein Überschreiten oder Unterschreiten eines Schwellwertes die zweite zeitliche Ableitung des Momentanwerts des Spulenstroms verwendet wird.

8. Verfahren nach einem der vorangehenden Ansprüche, **dadurch gekennzeichnet, dass** zeitlich nacheinander eine Reihe von Kriterien aus dem Momentanwert des Spulenstroms (Ib), dessen erster zeitlicher Ableitung (Ib1) und dessen zweiter zeitlicher Ableitung (Ib2) gebildet werden, die nacheinander erfüllt sein müssen, um eine Ankerbewegung zu detektieren.

9. Verfahren nach Anspruch 8, **dadurch gekennzeichnet, dass** beim Öffnen der Bremse fünf Kriterien (P10, P20, P25, P30, P35) erfüllt sein müssen, wobei das erste Kriterium (P10) ist, dass die zweite Ableitung (Ib2) des Momentanwerts des Spulenstroms (Ib) negativ ist, das zweite Kriterium (P20) ist, dass die erste Ableitung (Ib1) des Momentanwerts des Spulenstroms (Ib) negativ ist, das dritte Kriterium (P25) ist, dass die zweite Ableitung (Ib2) des Momentanwerts des Spulenstroms (Ib) positiv ist, das vierte Kriterium (P30) ist, dass die erste Ableitung (Ib1) des Momentanwerts des Spulenstroms (Ib) positiv ist und das fünfte Kriterium (P35) ist, dass die zweite Ableitung (Ib2) des Momentanwerts des Spulenstroms (Ib) negativ ist.

10. Verfahren nach Anspruch 9, **dadurch gekennzeichnet, dass** eine Überwachung einer Abweichung der Versorgungsspannung (Ub) von einem vorgegebenen Verlauf erst gestartet wird, wenn ein Kriterium, insbesondere das erste Kriterium (P10), erfüllt ist, insbesondere wobei die aktuelle Spannung als Referenzwert gespeichert wird.

11. Verfahren nach einem der Ansprüche 8 bis 10, **dadurch gekennzeichnet, dass** beim Schließen der Bremse (2) zwei Kriterien (P40, P50), erfüllt sein müssen, wobei das erste Kriterium (P40) ist, dass die zweite Ableitung (Ib2) des Momentanwerts des Spulenstroms (Ib) positiv ist und das zweite Kriterium (P50) ist, dass die zweite Ableitung (Ib2) des Momentanwerts des Spulenstroms (Ib) negativ ist.

12. Bremsenüberwachungseinrichtung, mit einer Detektionseinrichtung (7), mit der eine Ankerbewegung durch Auswertung eines Spulenstroms (Ib) detektierbar ist, **dadurch gekennzeichnet, dass** die Bremsenüberwachungseinrichtung eine Überprüfungsvorrichtung (7) umfasst, die zur Überwachung einer Versorgungsspannung (Ub) für den Spulenstrom (Ib) eingerichtet ist, so dass eine detektierte Ankerbewegung verworfen wird, wenn eine Versorgungsspannung (Ub) für den Spulenstrom (Ib) von einem vorgegebenen Verlauf zu stark abweicht, wobei ein Ausgang vorhanden ist, der eine verworfene detektierte Ankerbewegung bei erkannter Abweichung der Versorgungsspannung anzeigt.

13. Bremsenüberwachnugseinrichtung, insbesondere nach Anspruch 12, mit einer Detektionseinrichtung (7), mit der eine Ankerbewegung durch Auswertung eines Spulenstroms (Ib) detektierbar ist, **dadurch gekennzeichnet, dass** die Bremsenüberwachungseinrichtung eine Überprüfungsvorrichtung (7) umfasst, die zur Überwachung einer Versorgungsspannung (Ub) für den Spulenstrom (1b) eingerichtet ist, so dass eine detektierte Ankerbewegung verworfen wird, wenn eine Versorgungsspannung (Ub) für den Spulenstrom (Ib) von einem vorgegebenen Verlauf zu stark abweicht, wobei eine Plausibilitätsprüfungseinheit (7) ausgebildet ist, mit welcher die Überprüfungsvorrichtung (7) deaktivierbar ist, wenn eine Abweichung der Versorgungsspannung nicht geeignet ist, eine falsche Ankerbewegung zu erzeugen.

14. Bremsenüberwachungseinrichtung nach Anspruch 12 oder 13, **dadurch gekennzeichnet, dass** ein Verfahren nach einem der Ansprüche 1 bis 11 ausführbar ist.

## Claims

1. Method for monitoring an electromagnetic brake (2), wherein a coil current (Ib) is captured in order to detect an armature movement, **characterized in that** a detected armature movement is discarded if a supply voltage (Ub) for the coil current (Ib) deviates too greatly from a predefined profile, wherein the detected armature movement is discarded only if the deviation of the supply voltage (Ub) occurred in the time range in which the armature movement was detected.

2. Method according to Claim 1, **characterized in that** monitoring of a deviation of the supply voltage (Ub) from a predefined profile is started only when a starting criterion has been met, in particular the coil current (Ib) exceeds a first threshold value (I_Start).

3. Method for monitoring an electromagnetic brake (2), in particular according to either of the preceding claims, wherein a coil current (Ib) is captured in order to detect an armature movement, **characterized in that** a detected armature movement is discarded if a supply voltage (Ub) for the coil current (Ib) deviates too greatly from a predefined profile, wherein the detected armature movement is discarded only if the deviation of the supply voltage (Ub) was sufficiently great to effect a change in the coil current (Ib) that would lead to a detection of an armature movement.

4. Method for monitoring an electromagnetic brake (2), in particular according to one of the preceding claims, wherein a coil current (Ib) is captured in order to detect an armature movement, **characterized in that** a detected armature movement is discarded if a supply voltage (Ub) for the coil current (Ib) deviates too greatly from a predefined profile, wherein the detected armature movement is discarded only if the deviation of the supply voltage (Ub) has a particular direction (increase or decrease) to effect a change in the coil current (Ib) that would lead to a detection of an armature movement.

5. Method according to one of the preceding claims, **characterized in that** the supply voltage (Ub) is filtered, wherein a filter characteristic is chosen such that deviations, the temporal length and/or magnitude of which is too small to be able to initiate detection of an armature movement, are filtered out.

6. Method for monitoring an electromagnetic brake (2), in particular according to one of the preceding claims, wherein a coil current is captured in order to detect an armature movement, **characterized in that** at least one criterion is formed at least from the second time derivative of the instantaneous value of the coil current, which criterion is checked to detect the armature movement.

7. Method according to one of the preceding claims, **characterized in that** the at least one criterion used is the second time derivative of the instantaneous value of the coil current exceeding or falling below a threshold value.

8. Method according to one of the preceding claims, **characterized in that** a series of criteria are formed in temporal succession from the instantaneous value of the coil current (Ib), the first time derivative (Ib1) thereof and the second time derivative (Ib2) thereof, which criteria have to be met in succession in order to detect an armature movement.

9. Method according to Claim 8, **characterized in that** five criteria (P10, P20, P25, P30, P35) have to be met when the brake is opened, wherein the first criterion (P10) is that the second derivative (Ib2) of the instantaneous value of the coil current (Ib) is negative, the second criterion (P20) is that the first derivative (Ib1) of the instantaneous value of the coil current (Ib) is negative, the third criterion (P25) is that the second derivative (Ib2) of the instantaneous value of the coil current (Ib) is positive, the fourth criterion (P30) is that the first derivative (Ib1) of the instantaneous value of the coil current (Ib) is positive, and the fifth criterion (P35) is that the second derivative (Ib2) of the instantaneous value of the coil current (Ib) is negative.

10. Method according to Claim 9, **characterized in that** monitoring of a deviation of the supply voltage (Ub) from a predefined profile is started only when a criterion, in particular the first criterion (P10), has been met, in particular wherein the present voltage is stored as a reference value.

11. Method according to one of Claims 8 to 10, **characterized in that** two criteria (P40, P50) have to be met when the brake (2) is closed, wherein the first criterion (P40) is that the second derivative (Ib2) of the instantaneous value of the coil current (Ib) is positive and the second criterion (P50) is that the second derivative (Ib2) of the instantaneous value of the coil current (Ib) is negative.

12. Brake monitoring apparatus, comprising a detection apparatus (7), using which an armature movement is able to be detected by evaluating a coil current (Ib), **characterized in that** the brake monitoring apparatus comprises a checking device (7) that is configured to monitor a supply voltage (Ub) for the coil current (Ib), such that a detected armature movement is discarded if a supply voltage (Ub) for the coil current (Ib) deviates too greatly from a predefined profile, wherein an output is present that indicates a discarded detected armature movement when a deviation of the supply voltage is identified.

13. Brake monitoring apparatus, in particular according to Claim 12, comprising a detection apparatus (7), using which an armature movement is able to be detected by evaluating a coil current (Ib), **characterized in that** the brake monitoring apparatus comprises a checking device (7) that is configured to monitor a supply voltage (Ub) for the coil current (Ib), such that a detected armature movement is discarded if a supply voltage (Ub) for the coil current (Ib) deviates too greatly from a predefined profile, wherein a plausibility checking unit (7) is formed, using which the checking device (7) is able to be deactivated if a deviation of the supply voltage is not suitable for producing a false armature movement.

14. Brake monitoring apparatus according to Claim 12 or 13, **characterized in that** a method according to one of Claims 1 to 11 is able to be carried out.

## Revendications

1. Procédé de surveillance d'un frein électromagnétique (2) selon lequel un courant de bobine (Ib) est enregistré pour détecter un mouvement d'induit, **caractérisé en ce qu'**un mouvement d'induit détecté est rejeté quand une tension d'alimentation (Ub) pour le courant de bobine (Ib) s'écarte trop d'une courbe prédéterminée, le mouvement d'induit détecté n'étant rejeté que si l'écart de la tension d'alimentation (Ub) s'est produit sur la plage temporelle sur laquelle le mouvement d'induit a été détecté.

2. Procédé selon la revendication 1, **caractérisé en ce qu'**une surveillance d'un écart de la tension d'alimentation (Ub) par rapport à une courbe prédéfinie ne démarre que quand un critère de démarrage est rempli, en particulier quand le courant de bobine (Ib) dépasse une première valeur-seuil (I_Start).

3. Procédé de surveillance d'un frein électromagnétique (2), en particulier selon une des revendications précédentes, selon lequel un courant de bobine (Ib) est enregistré pour détecter un mouvement d'induit, **caractérisé en ce qu'**un mouvement d'induit détecté est rejeté quand une tension d'alimentation (Ub) pour le courant de bobine (Ib) s'écarte trop d'une courbe prédéterminée, le mouvement d'induit détecté n'étant rejeté que si l'écart de la tension d'alimentation (Ub) a été suffisamment important pour provoquer une variation du courant de bobine (Ib) qui engendrerait une détection d'un mouvement d'induit.

4. Procédé de surveillance d'un frein électromagnétique (2), en particulier selon une des revendications précédentes, selon lequel un courant de bobine (Ib) est enregistré pour détecter un mouvement d'induit, **caractérisé en ce qu'**un mouvement d'induit détecté est rejeté quand une tension d'alimentation (Ub) pour le courant de bobine (Ib) s'écarte trop d'une courbe prédéterminée, le mouvement d'induit détecté n'étant rejeté que si l'écart de la tension d'alimentation (Ub) présente une direction (hausse ou baisse) définie pour provoquer une variation du courant de bobine (Ib) qui engendrerait une détection d'un mouvement d'induit.

5. Procédé selon une des revendications précédentes, **caractérisé en ce que** la tension d'alimentation (Ub) est filtrée, une caractéristique de filtrage étant choisie de sorte que les écarts dont la longueur temporelle et/ou le niveau est trop faible pour pouvoir déclencher une détection d'un mouvement d'induit sont exclus.

6. Procédé de surveillance d'un frein électromagnétique (2), en particulier selon une des revendications précédentes, selon lequel un courant de bobine est enregistré pour détecter un mouvement d'induit, **caractérisé en ce qu'**au moins un critère qui est contrôlé pour la détection du mouvement d'induit est constitué au moins à partir de la dérivée seconde dans le temps de la valeur instantanée du courant de bobine.

7. Procédé selon une des revendications précédentes, **caractérisé en ce qu'**en guise d'au moins un critère est utilisé un dépassement vers le haut ou vers le bas d'une valeur-seuil, la dérivée seconde dans le temps de la valeur instantanée du courant de bobine.

8. Procédé selon une des revendications précédentes, **caractérisé en ce qu'**une série de critères se succédant dans le temps sont constitués à partir de la valeur instantanée du courant de bobine (Ib), de sa dérivée première dans le temps (Ib1) et de sa dérivée seconde dans le temps (Ib2), lesquels doivent être remplis les uns après les autres pour détecter un mouvement d'induit.

9. Procédé selon la revendication 8, **caractérisé en ce que** cinq critères (P10, P20, P25, P30, P35) doivent être remplis lors de l'ouverture du frein, le premier critère (P10) étant que la dérivée seconde (Ib2) de la valeur instantanée du courant de bobine (Ib) est négative, le deuxième critère (P20) étant que la dérivée première (Ib1) de la valeur instantanée du courant de bobine (Ib) est négative, le troisième critère (P25) étant que la dérivée seconde (Ib2) de la valeur instantanée du courant de bobine (Ib) est positive, le quatrième critère (P30) étant que la dérivée première (Ib1) de la valeur instantanée du courant de bobine (Ib) est positive et le cinquième critère (P35) étant que la dérivée seconde (Ib2) de la valeur instantanée du courant de bobine (Ib) est négative.

10. Procédé selon la revendication 9, **caractérisé en ce qu'**une surveillance d'un écart de la tension d'alimentation (Ub) par rapport à une courbe prédéfinie ne démarre que quand le premier critère (P10) est rempli, en particulier la tension actuelle étant enregistrée comme valeur de référence.

11. Procédé selon une des revendications 8 à 10, **caractérisé en ce que** lors de la fermeture du frein (2), deux critères (P40, P50) doivent être remplis, le premier critère (P40) étant que la dérivée seconde (Ib2) de la valeur instantanée du courant de bobine (Ib) est positive et le deuxième critère (P50) étant que la dérivée seconde (Ib2) de la valeur instantanée du courant de bobine (Ib) est négative.

12. Dispositif de surveillance de frein doté d'un dispositif de détection (7) avec lequel un mouvement d'induit peut être détecté en évaluant un courant de bobine (Ib), **caractérisé en ce que** ce dispositif de surveillance de frein possède un dispositif de contrôle (7) qui est adapté pour surveiller une tension d'alimentation (Ub) pour le courant de bobine (Ib), de sorte qu'un mouvement d'induit détecté est rejeté quand une tension d'alimentation (Ub) pour le courant de bobine (Ib) s'écarte trop d'une courbe prédéterminée, une sortie qui indique un mouvement d'induit détecté rejeté lorsqu'un écart de la tension d'alimentation a été identifié étant présente.

13. Dispositif de surveillance de frein, en particulier selon la revendication 12, doté d'un dispositif de détection (7) avec lequel un mouvement d'induit peut être détecté en évaluant un courant de bobine (Ib), **caractérisé en ce que** ce dispositif de surveillance de frein possède un dispositif de contrôle (7) qui est adapté pour surveiller une tension d'alimentation (Ub) pour le courant de bobine (Ib), de sorte qu'un mouvement d'induit détecté est rejeté quand une tension d'alimentation (Ub) pour le courant de bobine (Ib) s'écarte trop d'une courbe prédéterminée, une unité de contrôle de vraisemblance (7) avec laquelle le dispositif de détection (7) peut être désactivé quand un écart de la tension d'alimentation n'est pas approprié pour produire un faux mouvement d'induit étant présente.

14. Dispositif de surveillance de frein selon la revendication 12 ou 13, **caractérisé en ce qu'**un procédé selon une des revendications 1 à 11 peut être mis en oeuvre.
